# EUROPEAN PATENT SPECIFICATION

(11) **EP 3 879 149 B1**
(45) Date of publication and mention of the grant of the patent: **18.09.2024**
(21) Application number: 19883037.4
(22) Date of filing: 04.10.2019
(51) Int. Cl.: F16K 11/048, F16K 11/07, F16K 27/02, F16K 11/02, F16K 27/04

(54) **FLOW PATH SWITCHING VALVE**
STRÖMUNGSWEGUMSCHALTVENTIL
SOUPAPE DE COMMUTATION DE TRAJET D'ÉCOULEMENT

(30) Priority: 08.11.2018 JP 2018210139; 21.01.2019 JP 2019007604
(43) Date of publication of application: 15.09.2021
(73) Proprietor: Fujikoki Corporation, Tokyo 158-0082 (JP)
(72) Inventor: YANAGISAWA, Shu, Tokyo 158-0082 (JP); SUGANUMA, Takeshi, Tokyo 158-0082 (JP); KOIZUMI, Yuki, Tokyo 158-0082 (JP)
(74) Representative: Ter Meer Steinmeister & Partner
(86) International application number: PCT/JP2019/039315
(87) International publication number: WO 2020/095591

(56) References cited:
- WO-A1-2018/016462
- CN-A- 107 084 261
- DE-A1- 102012 222 698
- JP-A- 2003 014 144
- JP-A- 2003 014 144
- JP-A- 2012 041 823
- JP-A- H1 151 228
- JP-U- S5 859 861
- JP-U- S5 859 861
- JP-U- S56 174 767
- US-A1- 2005 217 740

## Description

### Technical Field

The present invention relates to a flow channel switching valve, and in particular, to a flow channel switching valve, for example, a three-way switching valve that has a simple structure and is easy to assemble.

### Background Art

As one of examples of this type of flow channel switching valve, Patent Literature 1 below discloses a flow channel switching valve including: a valve body including a valve chamber, a first inlet/outlet port, a second inlet/outlet port, and a third inlet/outlet port opening in the valve chamber, an upper valve seat provided between the first inlet/outlet port and the second inlet/outlet port, and a lower valve seat provided between the first inlet/outlet port and the third inlet/outlet port; a valve stem (i.e., valve element) disposed in the valve chamber in a vertically movable manner and including an upper valve element and a lower valve element separated from each other in a vertical movement direction, the upper valve element and the lower valve element being adapted to be selectively moved into contact with or away from the upper valve seat and the lower valve seat so as to switch a flow direction between the first inlet/outlet port, the second inlet/outlet port, and the third inlet/outlet port; and a vertical movement drive unit adapted to vertically move the valve stem, in which a diameter of a back pressure chamber formed on the upper side of the upper valve element, a diameter of the upper valve seat, and a diameter of the lower valve seat are set equal to each other, and a pressure equalizing passage is provided within the valve stem, the pressure equalizing passage communicating between a bottom space formed on the lower side of the lower valve element and the back pressure chamber.

According to the aforementioned conventional flow channel switching valve, in switching the flow channel by the movement of the valve element (i.e., the upper valve element and the lower valve element), the force applied in the moving direction of the valve element may be brought into balance (i.e., the pressure difference may be cancelled), and a seal member such as an O-ring does not need to be disposed between the valve element (i.e., the upper valve element and the lower valve element) and the valve body. This can reduce the load on the valve element as low as possible in switching the flow channel and reduce the driving torque of the valve element, thus allowing the flow channel switching valve to have a smaller size, larger capacity, lower power consumption, and the like.

### Citation List

### Patent Literature

Patent Literature 1: JP 2017-129240 A

US 2005/217740 A1 discloses a solenoid valve comprising a solenoid portion and a valve portion. The solenoid portion is constructed by a stator core, an electromagnetic coil and a plunger. The valve portion is constructed by a valve sleeve and a spool axially forming plural lands in series. The plunger is axially moved electromagnetic attraction and drives the spool.

JP 2003 014144 A discloses a device for switching flow direction of a fluid, in which the valve body comprises an inlet communication with a supply source of the fluid, an outlet communicating with an outflow destination of the fluid, a first entrance port communicating with the inlet and the outlet, and communicating with a circulation passage of the fluid using apparatus, and an entrance port communicating with the inlet and outlet and communicating with the circulating passage of the fluid using apparatus. At least one of a valve element of a first opening and closing valve and a valve element of a second opening and closing valve is adapted to be inserted in a first vertical hole, and at least one of the valve elements of a third opening and closing valve and a valve element of a fourth opening and closing valve is adapted to be inserted into a second vertical hole.

Similar flow channel switching valves are disclosed by JP S58 59861 U, WO 2018/016462 A1 and DE 10 2012 222 698 A1.

### Summary of Invention

### Technical Problem

By the way, in the conventional flow channel switching valve of this type, usually the upper valve element and the lower valve element in the valve stem (i.e., the valve element) are selectively moved into contact with or away from the upper valve seat and the lower valve seat in the valve body, thereby switching the flow direction between the respective inlet/outlet ports. In this configuration, it is necessary that, for example, first a coupling shaft that couples the upper valve element and the lower valve element is passed through the inside of a cylindrical valve seat member including the upper valve seat and the lower valve seat, and then the upper valve element or the lower valve element, which are the components separate from the coupling shaft, is assembled into the upper part or the lower part of the coupling shaft (from the direction to have the upper valve element or the lower valve element seated). In addition, when the inlet/outlet ports have a large pressure difference therebetween, a structure for cancelling the pressure difference may be required as described above. This also raises problems that the flow channel switching valve is complicated in structure and difficult to assemble, resulting in high component cost or assembly cost.

The present invention has been made in view of the foregoing, and it is an object of the present invention to provide a flow channel switching valve that has a simple structure and is easy to assemble, and thus can reduce the component cost or assembly cost.

### Solution to Problem

To solve the above-described problems, a flow switching valve according to the present invention is characterized by the features of claim 1. Preferred embodiments of the present invention are defined by the subclaims. The flow channel switching valve according to the present invention basically includes: a valve body including a valve chamber, an upper inlet/outlet port, an intermediate inlet/outlet port, and a lower inlet/outlet port opening in the valve chamber, an upper valve orifice provided between the upper inlet/outlet port and the intermediate inlet/outlet port, and a lower valve orifice provided between the intermediate inlet/outlet port and the lower inlet/outlet port; a valve element disposed in the valve chamber in a vertically movable manner and including an upper valve element portion and a lower valve element portion separated from each other in a vertical movement direction, the upper valve element portion and the lower valve element portion being adapted to control a flow rate of a fluid flowing through the upper valve orifice and the lower valve orifice; and a vertical movement drive unit provided on an upper side of the valve element so as to move up or down the valve element, in which the lower valve element portion is formed to have a smaller diameter than that of the upper valve orifice and the lower valve orifice, and can be inserted into an inside of the lower valve orifice through the upper valve orifice.

In a preferable aspect, the upper valve element portion is formed to have a smaller diameter than that of the upper valve orifice and can be inserted into an inside of the upper valve orifice.

According to the present invention a bottom portion of the valve body is a lower stopper adapted to define a lowest position of the valve element.

In further preferable aspect, a lower end of the valve element adapted to abut the bottom portion of the valve body is formed of a plane face.

In another preferable aspect, the upper valve element portion is formed to have a larger diameter than that of the upper valve orifice and is adapted to be moved into contact with or away from a valve seat provided in the upper valve orifice.

In another preferable aspect, an intermediate neck portion is provided between the upper valve element portion and the lower valve element portion, the intermediate neck portion having a smaller diameter than that of the upper valve element portion and the lower valve element portion.

In further preferable aspect, a truncated cone-shaped tapered face portion continuous to the intermediate neck portion is provided in at least one of the upper valve element portion and the lower valve element portion.

In still another preferable aspect, the upper valve element portion has an outside diameter equal to that of the lower valve element portion.

In still another preferable aspect, the upper valve element portion is formed to have a larger diameter than that of the lower valve element portion.

In still another preferable aspect, a space between the upper valve orifice and the lower valve orifice is formed of a cylindrical face.

In still another preferable aspect, the valve chamber includes an upper diameter-expanded portion having a relatively large diameter, a lower diameter-expanded portion having a relatively large diameter, and an intermediate diameter-reduced portion having a relatively small diameter, the upper diameter-expanded portion having the upper inlet/outlet port and having the upper valve element portion disposed therein, the lower diameter-expanded portion having the lower inlet/outlet port and having the lower valve element portion disposed therein, the intermediate diameter-reduced portion having the intermediate inlet/outlet port and being provided between the upper diameter-expanded portion and the lower diameter-expanded portion; and a step portion formed between the upper diameter-expanded portion and the intermediate diameter-reduced portion is the upper valve orifice and a step portion formed between the lower diameter-expanded portion and the intermediate diameter-reduced portion is the lower valve orifice.

In still another preferable aspect, the valve element has a single-component configuration.

In still another preferable aspect, the valve body has a single-component configuration.

In still another preferable aspect, the valve body includes a valve element guide portion for limiting a lateral movement of a lower part of the valve element.

In still another preferable aspect, a bottom portion of the valve body includes a valve element guide hole as the valve element guide portion, the valve element guide hole having a lower end of the valve element inserted thereinto.

In still another preferable aspect, the lower end of the valve element is inserted into the valve element guide hole while the valve element is moved between a lowest position and a highest position.

In still another preferable aspect, the lower end of the valve element is formed of a curved face.

In still another preferable aspect, the valve body includes a trunk member and a bottom cap member, the trunk member including the valve chamber and having a bottom opening, the bottom cap member being adapted to hermetically close the bottom opening of the trunk member.

In still another preferable aspect, the valve element guide hole is provided in the bottom cap member.

In still another preferable aspect, the valve element guide hole is provided in a fitting protrusion of the bottom cap member, the fitting protrusion being adapted to be fitted into the bottom opening.

In still another preferable aspect, the valve element guide hole is formed of the bottom opening of the trunk member and the bottom cap member.

### Advantageous Effects of Invention

According to the present invention, the lower valve element portion provided in the valve element on the opposite side of the vertical movement drive unit is formed to have a smaller diameter than that of the upper valve orifice and the lower valve orifice, and can be inserted into the inside of the lower valve orifice via the upper valve orifice, and thus the valve element can be inserted into the valve chamber and disposed in a predetermined position within the valve chamber (in one direction) from the upper side of the valve body. Therefore, the flow channel switching valve of the present invention has a simple structure and is easy to assemble, and thus can reduce the component cost or assembly cost.

In addition, the valve element guide portion for limiting the lateral movement of the lower part of the valve element is provided in the valve body, and the valve element guide hole having the lower end of the valve element inserted thereinto is provided in the bottom portion of the valve body as the valve element guide portion, for example, and thus the flow channel switching valve of the present invention can suppress the vibration noise of the valve element, operation failures such as locking of the valve element, scratching of the valve element, for example, and thus can achieve a stable flow rate.

### Brief Description of Drawings

Fig. 1 is a vertical cross-sectional view of a first embodiment of the flow channel switching valve according to the present invention, in which a valve element is in the lowest position.
Fig. 2 is a vertical cross-sectional view of the first embodiment of the flow channel switching valve according to the present invention, in which a valve element is in the highest position.
Fig. 3 is a graph showing the flow characteristic of the first embodiment of the flow channel switching valve according to the present invention.
Fig. 4 is a vertical cross-sectional view of a second embodiment of the flow channel switching valve according to the present invention, in which a valve element is in the lowest position (i.e., an upper valve element portion is seated).
Fig. 5 is a vertical cross-sectional view of the second embodiment of the flow channel switching valve according to the present invention, in which a valve element is in the highest position.
Fig. 6 is a graph showing the flow characteristic of the second embodiment of the flow channel switching valve according to the present invention.
Fig. 7 is a vertical cross-sectional view of a third embodiment of the flow channel switching valve according to the present invention, in which a valve element is in the lowest position.
Fig. 8 is a vertical cross-sectional view of the third embodiment of the flow channel switching valve according to the present invention, in which a valve element is in the highest position.
Fig. 9 is a partial vertical cross-sectional view showing a valve element (i.e., valve stem) in a state of being inclined.
Fig. 10 is a partial enlarged vertical cross-sectional view showing another example of the third embodiment of the flow channel switching valve according to the present invention.
Fig. 11 is a vertical cross-sectional view of a fourth embodiment of the flow channel switching valve according to the present invention, in which a valve element is in the lowest position.
Fig. 12 is a vertical cross-sectional view of a fifth embodiment of the flow channel switching valve according to the present invention, in which a valve element is in the lowest position.

### Description of Embodiments

Hereinafter, embodiments of the present invention will be described with reference to the drawings. It should be noted that in the following description, a motor-operated flow channel switching valve, which uses a stepping motor as a vertical movement drive unit for moving up or down a valve element, is mainly employed, but it is needless to mention that an electromagnetic flow channel switching valve, which uses a solenoid as a vertical movement drive unit, for example, may be employed.

### [First embodiment]

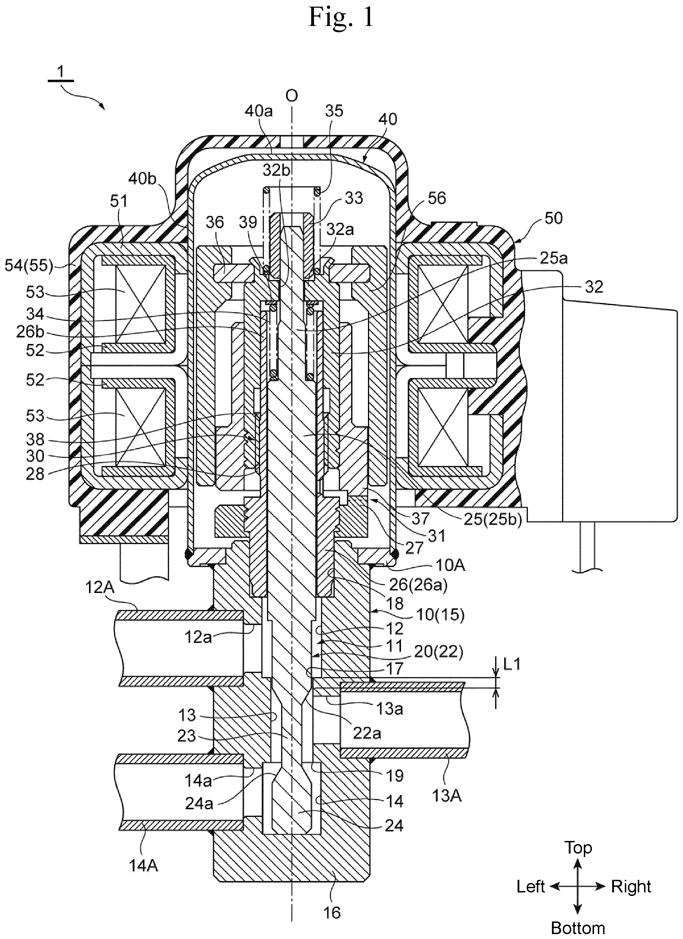

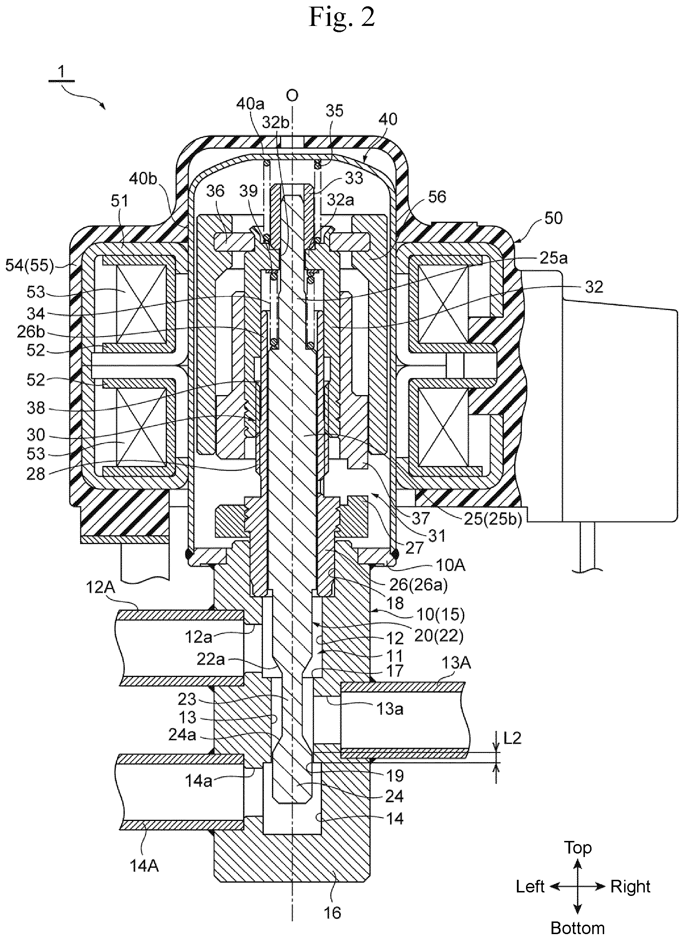

Fig. 1 and Fig. 2 are vertical cross-sectional views each showing a first embodiment of the flow channel switching valve according to the present invention. Fig. 1 shows a valve element in the lowest position, and Fig. 2 shows a valve element in the highest position.

It should be noted that in the present specification, descriptions indicating the positions or directions, such as upper, lower, top, bottom, left, right, front, and rear, are used for the sake of convenience in accordance with the drawings to avoid complexity in the description, but such descriptions do not necessarily indicate the actual positions or directions when the flow channel switching valve of the present invention is actually used.

In addition, in each drawing, a gap formed between some members, a clearance between some members, and the like may be depicted larger or smaller than their actual dimensions to help understand the invention and also for the sake of convenience to create the drawing.

A flow channel switching valve 1 of the illustrated embodiment is adapted to switch the flow direction (i.e., flow channel) between the inlet/outlet ports by moving up or down (i.e., vertical movement) the valve element by using a stepping motor as a vertical movement drive unit, and in particular, the flow channel switching valve 1 is a motor-operated valve of a closing-valve-less type in which the valve element is not seated on the valve orifice (i.e., valve seat). The flow channel switching valve 1 basically includes a valve body 10 with a valve chamber 11 that receives and sends out fluid such as a refrigerant, a valve element 20 disposed in the valve chamber 11 in a vertically movable manner, and a stepping motor 50 attached to the upper side of the valve body 10 and the valve element 20.

The valve body 10 is made from, for example, metal material such as SUS or brass or resin material, and has a closed-bottomed cylindrical shape formed with steps inside thereof. More specifically, the inside of the valve body 10 (or a cylindrical portion 15 thereof) includes, in the vertical positions (so as to be separated in the axis a direction (i.e., vertical movement direction)), an upper diameter-expanded portion 12 and a lower diameter-expanded portion 14, each having a relatively large diameter, formed of cylindrical cavities having the same diameter, and an intermediate diameter-reduced portion 13 having a relatively small diameter and formed of a cylindrical cavity between the upper diameter-expanded portion 12 and the lower diameter-expanded portion 14. The upper diameter-expanded portion 12, the intermediate diameter-reduced portion 13, and the lower diameter-expanded portion 14 form the valve chamber 11. It should be noted that the upper end (i.e., the upper side of the upper diameter-expanded portion 12) of the valve body 10 includes a fitting hole 18 (having a larger diameter than that of the upper diameter-expanded portion 12) to which a lower end 26a of a guide bush 26 (described later) is securely attached (i.e., fixed by press-fitting).

The side portion of the valve body 10 (or the cylindrical portion 15 thereof) includes, so as to be separated in the axis O direction, from the top, an upper inlet/outlet port 12a, an intermediate inlet/outlet port 13a, and a lower inlet/outlet port 14a, which respectively open in the lateral direction in the upper diameter-expanded portion 12, the intermediate diameter-reduced portion 13, and the lower diameter-expanded portion 14, which form the valve chamber 11. The upper inlet/outlet port 12a, the intermediate inlet/outlet port 13a, and the lower inlet/outlet port 14a respectively have pipe joints 12A, 13A, 14A attached thereto through brazing or the like.

It should be noted that in this example, the intermediate inlet/outlet port 13a is formed on the opposite side of the upper inlet/outlet port 12a and the lower inlet/outlet port 14a (with an angle interval of 180 degrees) as viewed along the axis O (i.e., in plan view). However, it is needless to mention that the circumferential positions of the inlet/outlet ports may be changed appropriately according to the position of the flow channel switching valve 1 to be applied. Furthermore, the lower inlet/outlet port 14a (and the pipe joint 14A) provided on the lower side may be formed on a bottom portion 16 of the valve body 10, instead of the side portion of the cylindrical portion 15 of the valve body 10 as described above.

In the valve body 10, the upper end (in other words, a step portion between the upper diameter-expanded portion 12 and the intermediate diameter-reduced portion 13) of the intermediate diameter-reduced portion 13 formed of a cylindrical face (with a constant inside diameter in the axis O direction) is an upper valve orifice 17, into which an upper valve element portion 22 (described later) is inserted to define a flow rate of a fluid passing between the upper inlet/outlet port 12a and the intermediate inlet/outlet port 13a. The lower end (in other words, a step portion between the lower diameter-expanded portion 14 and the intermediate diameter-reduced portion 13) of the intermediate diameter-reduced portion 13 is a lower valve orifice 19, into which a lower valve element portion 24 (described later) is inserted to define a flow rate of a fluid passing between the lower inlet/outlet port 14a and the intermediate inlet/outlet port 13a. That is, in the present embodiment, the valve orifice diameter of the upper valve orifice 17 is equal to that of the lower valve orifice 19.

In this example, the bottom portion 16 (or the upper face thereof) of the valve body 10 comes into contact with the lower end (tip) of the valve element 20 (described later) and acts as a lower stopper for limiting the downward movement of the valve element 20 (and a valve stem 25) (in other words, for defining the lowest position of the valve element 20).

The valve element 20 is (integrally) formed in the lower end of the valve stem 25 (described later) and is disposed in the valve chamber 11, and has a stepped columnar shape with a smaller diameter than that of the valve stem 25 (or a lower large-diameter sliding portion 25b thereof).

This valve element 20 includes the upper valve element portion 22 and the lower valve element portion 24 in the vertical positions (so as to be separated in the axis O direction) for controlling a flow rate of a fluid flowing through the upper valve orifice 17 and the lower valve orifice 19 as described above, and also includes an intermediate neck portion 23 having a smaller diameter than that of the upper valve element portion 22 and the lower valve element portion 24 between the upper valve element portion 22 and the lower valve element portion 24. In other words, the valve element 20 includes the upper valve element portion 22 and the lower valve element portion 24, each having a larger diameter than that of the intermediate neck portion 23, on the upper side and the lower side of the intermediate neck portion 23, respectively.

The lower part of the upper valve element portion 22 includes an inverted truncated cone-shaped upper tapered face portion 22a (formed of an inverted truncated cone face) continuous to the intermediate neck portion 23 (or the upper part thereof). The upper part of the lower valve element portion 24 includes a truncated cone-shaped lower tapered face portion 24a (formed of a truncated cone face) continuous to the intermediate neck portion 23 (or the lower part thereof).

In the present embodiment, the upper valve element portion 22 and the lower valve element portion 24 (or the outside diameter thereof) of the valve element 20 are formed to have the same diameter (the same outside diameter), and to have a smaller diameter than that of the inside diameter (that is, the valve orifice diameter of the upper valve orifice 17 and the lower valve orifice 19) of the intermediate diameter-reduced portion 13 of the valve body 10. Therefore, in response to the upward or downward movement of the valve element 20 (the movement in the axis O direction), the upper valve element portion 22 of the valve element 20 is disposed in the upper diameter-expanded portion 12 of the valve body 10 and can be inserted into the upper valve orifice 17 (or the inside thereof) formed of the upper end of the intermediate diameter-reduced portion 13, with a gap of a predetermined size. In addition, the lower valve element portion 24 of the valve element 20 is disposed in the lower diameter-expanded portion 14 of the valve body 10 and can be inserted into the lower valve orifice 19 (or the inside thereof) formed of the lower end of the intermediate diameter-reduced portion 13, with a gap of a predetermined size. Furthermore, in assembling the flow channel switching valve, for example, the lower valve element portion 24 of the valve element 20 can be inserted into the inside of the lower valve orifice 19 via the upper valve orifice 17, and thus the valve element 20 can be inserted into the valve chamber 11 and disposed in a predetermined position within the valve chamber 11 (in one direction) from the upper side of the valve body 10 (i.e., an open upper face of the cylindrical portion 15).

In addition, the lower end of the valve element 20 (or the lower valve element portion 24 thereof) is formed of a plane face, and the lower end (i.e., the lower end face formed of the plane face) comes into contact with the bottom portion 16 (or the upper face thereof) (i.e., the lower stopper) of the valve body 10, thereby moving the valve element 20 (and the valve stem 25) to the lowest position.

In the present embodiment, as a vertical movement drive unit for moving up or down the valve element 20 (or the upper valve element portion 22 and the lower valve element portion 24 thereof) in the valve chamber 11 formed inside of the valve body 10, a direct-acting vertical movement drive unit is employed and provided on the upper side (i.e., close to the proximal end) of the valve body 10 and the valve element 20.

In other words, the lower end of a cylindrical can 40 having a ceiling portion 40a and an open lower face is sealed and joined to a flanged member 10A (or a step portion formed therein) provided on the outer periphery of the upper part of the valve body 10 (or the cylindrical portion 15 thereof) through butt welding.

A rotor 56 is disposed on the inner periphery of the can 40 with a predetermined gap, and a stator 55 including a york 51, a bobbin 52, a stator coil 53, and a resin mold cover 54, for example, is externally fitted around the outer periphery of a cylindrical portion 40b of the can 40 to rotate and drive the rotor 56. The rotor 56 and the stator 55 form the stepping motor 50.

Furthermore, a stepped stem-like (i.e., solid member) valve stem 25 made from, for example, metal material such as SUS or brass or resin material, and having the valve element 20 extended from the lower end thereof is disposed inside of the can 40 in the axis O direction.

A drive mechanism for moving up or down the valve element 20 (or the upper valve element portion 22 and the lower valve element portion 24 thereof) with respect to the upper valve orifice 17 and the lower valve orifice 19 by using the rotation of the rotor 56 is provided between the rotor 56 and the valve stem 25. This drive mechanism is formed of a thread feeding mechanism 30 including a fixed thread portion (i.e., external thread portion) 28 and a movable thread portion (i.e., internal thread portion) 38. The fixed thread portion (i.e., external thread portion) 28 is formed on the outer periphery of the tubular guide bush 26 that is securely fitted by press-fitting at the lower end 26a thereof to the fitting hole 18 provided in the center of the upper part of the valve body 10 and has slidably inserted thereinto the valve stem 25 (or the lower large-diameter sliding portion 25b thereof), and the movable thread portion (i.e., internal thread portion) 38 is formed on the inner periphery of the tubular valve stem holder 32 with an open lower face disposed on the outer periphery of the valve stem 25 and the guide bush 26 and is screwed into the fixed thread portion 28.

The valve stem holder 32 and the rotor 56 are coupled together by a support ring 36. A protrusion of the upper part of the valve stem holder 32 is fixed to the support ring 36 through swaging. This integrally couples together the rotor 56, the support ring 36, and the valve stem holder 32.

A lower stopper element (i.e., fixed stopper) 27 as one of the elements of a stopper mechanism 31 for limiting the rotation and downward movement of the rotor 56 (i.e., the valve stem holder 32) is securely attached to the outer periphery of the guide bush 26. An upper stopper element (i.e., movable stopper) 37 as the other one of the elements of the stopper mechanism 31 is securely attached to the outer periphery of the valve stem holder 32.

In addition, an upper small-diameter portion 26b of the guide bush 26 is inserted into the upper part of the valve stem holder 32, and the upper small-diameter fit-inserted portion 25a of the valve stem 25 is inserted through an insertion through-hole 32b formed in the center of the ceiling portion 32a of the valve stem holder 32. A push nut 33 is securely attached (fixed by press-fitting) to the upper end (i.e., the portion protruding from the insertion through-hole 32b) of the upper small-diameter fit-inserted portion 25a of the valve stem 25.

In addition, the valve stem 25 is always urged downward (i.e., in the valve-closing direction) by a compression coil spring 34 for shock absorption (for both valve closing and shock absorption in a second embodiment, which will be described later) that is externally arranged around the upper small-diameter fit-inserted portion 25a and disposed in a compressed state between the ceiling portion 32a of the valve stem holder 32 and an upper end terrace face of the lower large-diameter sliding portion 25b of the valve stem 25. In this case, the upper end of the compression coil spring 34 is engaged with the lower face of the ceiling portion 32a of the valve stem holder 32 via a spring receiving member 39 such as a washer. It should be noted that a return spring 35 of a coil spring is disposed on the ceiling portion 32a of the valve stem holder 32.

The vertical movement drive unit for moving up or down the valve element 20 is constituted of, for example, the stepping motor 50 including the rotor 56 and the stator 55 respectively disposed on the inner periphery and the outer periphery of the can 40; the guide bush 26 to which the valve stem 25 (or the lower large-diameter sliding portion 25b thereof) is slidably inserted; the thread feeding mechanism (i.e., the drive mechanism) 30 including the fixed thread portion 28 formed on the outer periphery of the guide bush 26 and the movable thread portion 38 formed on the inner periphery of the valve stem holder 32; the stopper mechanism 31 including the lower stopper element 27 securely attached to the outer periphery of the guide bush 26 and the upper stopper element 37 securely attached to the outer periphery of the valve stem holder 32; and the compression coil spring 34.

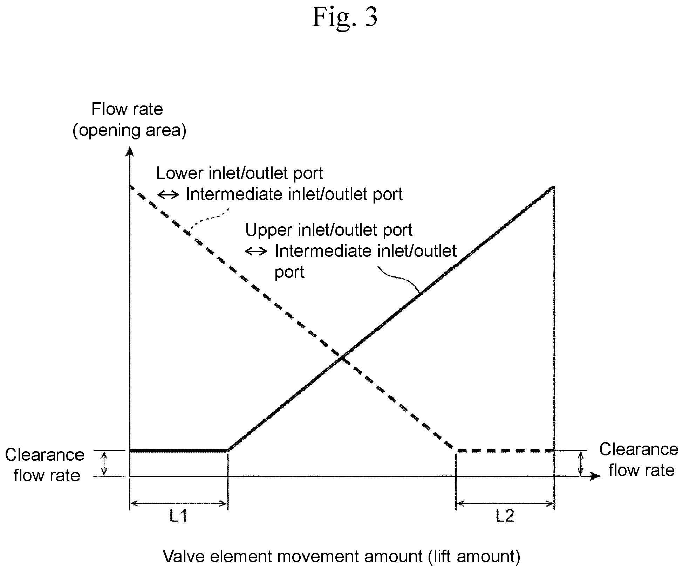

In the flow channel switching valve 1 with such a configuration, the stator 55 (or the stator coil 53 thereof) is controlled to be energized (supplied with pulses), whereby the rotor 56 and the valve stem holder 32 are integrally rotated relative to the guide bush 26 fixed to the valve body 10, and the thread feeding (i.e., the thread feeding mechanism 30) by the fixed thread portion 28 of the guide bush 26 and the movable thread portion 38 of the valve stem holder 32 causes the valve stem 25 (and the valve element 20) to move up or down (while rotating). This increases or decreases the gap between the upper valve element portion 22 and the upper valve orifice 17 and the gap between the lower valve element portion 24 and the lower valve orifice 19, thus adjusting the flow rate of a fluid such as a refrigerant flowing through the upper valve orifice 17 and the lower valve orifice 19. That is, in this example, the number of pulses to be supplied (corresponding to the number of rotations of the rotor 56) is controlled to change a lift amount (valve opening degree) of the valve element 20 extended below the valve stem 25. This can (simultaneously) adjust the flow rate of the fluid flowing through the upper valve orifice 17 and the lower valve orifice 19 (see Fig. 3).

In the flow channel switching valve 1 of the present embodiment with the above configuration, in particular, as illustrated in Fig. 1, the upper stopper element (movable stopper) 37 of the valve stem holder 32, which forms the stopper mechanism 31, abuts the lower stopper element (fixed stopper) 27 of the guide bush 26, and the lower end of the valve element 20 abuts the bottom portion 16 (lower stopper) of the valve body 10. When the valve element 20 is in the lowest position, the lower part (i.e., the upper tapered face portion 22a and a columnar portion having a vertical length L1 above the upper tapered face portion 22a) of the upper valve element portion 22 of the valve element 20 is inserted into the upper valve orifice 17 (with a gap of a predetermined size) (that is, the upper valve orifice 17 will not be closed), and the lower valve element portion 24 of the valve element 20 is positioned in the lower diameter-expanded portion 14 below the lower valve orifice 19. Thus, the fluid such as a refrigerant basically flows between the lower inlet/outlet port 14a and the intermediate inlet/outlet port 13a via the lower valve orifice 19, and even when the valve element 20 is in the lowest position (normally, the upper valve orifice 17 is in the valve closed position), a (cylindrical) gap (also referred to as a bleed flow channel) is formed between the upper valve element portion 22 of the valve element 20 and the upper valve orifice 17, and thus a predetermined amount of a flow rate (also referred to as a clearance flow rate) passing between the upper inlet/outlet port 12a and the intermediate inlet/outlet port 13a may be ensured (see Fig. 3).

Meanwhile, when the stator 55 (or the stator coil 53 thereof) is controlled to be energized (supplied with pulses), the valve stem 25 (and the valve element 20) is moved up or down from the position illustrated in Fig. 1, and when the valve element 20 is in the highest position as illustrated in Fig. 2, the upper valve element portion 22 of the valve element 20 is positioned in the upper diameter-expanded portion 12 above the upper valve orifice 17, and the upper part (i.e., the lower tapered face portion 24a and a columnar portion having a vertical length L2 below the lower tapered face portion 24a) of the lower valve element portion 24 of the valve element 20 is inserted into the lower valve orifice 19 (with a gap of a predetermined size) (that is, the lower valve orifice 19 will not be closed). Thus, the fluid such as a refrigerant basically flows between the upper inlet/outlet port 12a and the intermediate inlet/outlet port 13a via the upper valve orifice 17, and even when the valve element 20 is in the highest position (normally, the lower valve orifice 19 is in the valve closed position), a (cylindrical) gap (also referred to as a bleed flow channel) is formed between the lower valve element portion 24 of the valve element 20 and the lower valve orifice 19, and thus a predetermined amount of a flow rate (also referred to as a clearance flow rate) passing between the lower inlet/outlet port 14a and the intermediate inlet/outlet port 13a may be ensured (see Fig. 3).

It should be noted that the flow characteristic illustrated in Fig. 3 is one of examples, and it is needless to describe in detail that various flow characteristics may be achieved by adjusting dimensions, shapes, arrangements, structures, and the like of the valve element 20 and the valve body 10 as appropriate.

As described above, in the flow channel switching valve 1 of the present embodiment, the lower valve element portion 24 provided in the valve element 20 on the opposite side of the stepping motor 50 forming the vertical movement drive unit is formed to have a smaller diameter than that of the upper valve orifice 17 and the lower valve orifice 19, and can be inserted into the inside of the lower valve orifice 19 (with a gap of a predetermined size) via the upper valve orifice 17, and thus the valve element 20 can be inserted into the valve chamber 11 and disposed in a predetermined position within the valve chamber 11 (in one direction) from the upper side of the valve body 10. Therefore, the flow channel switching valve 1 of the present embodiment has a simple structure and is easy to assemble, and thus can reduce the component cost or assembly cost.

Furthermore, the valve element 20 (the valve stem 25) and the valve body 10 each has a single-component (single-member) configuration, and thus the flow channel switching valve 1 of the above embodiment has a reduced number of components. This can also achieve the flow channel switching valve 1 that has a simple structure and is easy to assemble, and thus can reduce the component cost or assembly cost.

It should be noted that in the flow channel switching valve 1 of the above embodiment, a pressure difference between the inlet/outlet ports is reduced as compared to the aforementioned conventional flow channel switching valve. Therefore, the flow channel switching valve 1 of the above embodiment can omit the structure of cancelling the pressure difference, and employ a direct-acting vertical movement drive unit, without using a mechanical paradox planetary gear reduction mechanism that reduces the speed of rotation of the rotor and transmits the rotation to the valve stem (i.e., the valve element). This can also achieve the flow channel switching valve 1 of the present embodiment that has a simple structure and is easy to assemble.

### [Second embodiment]

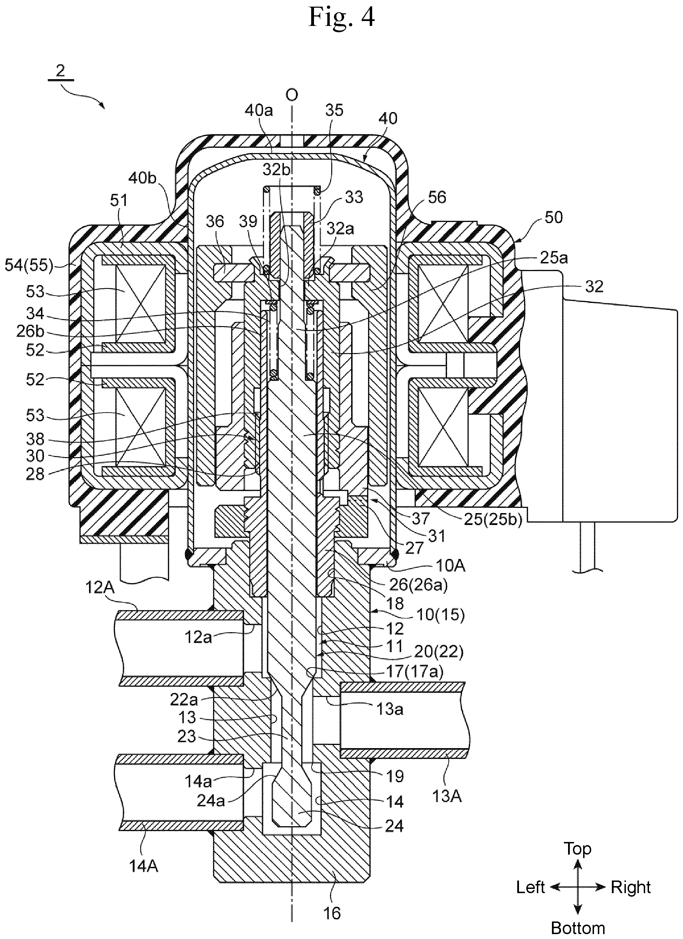

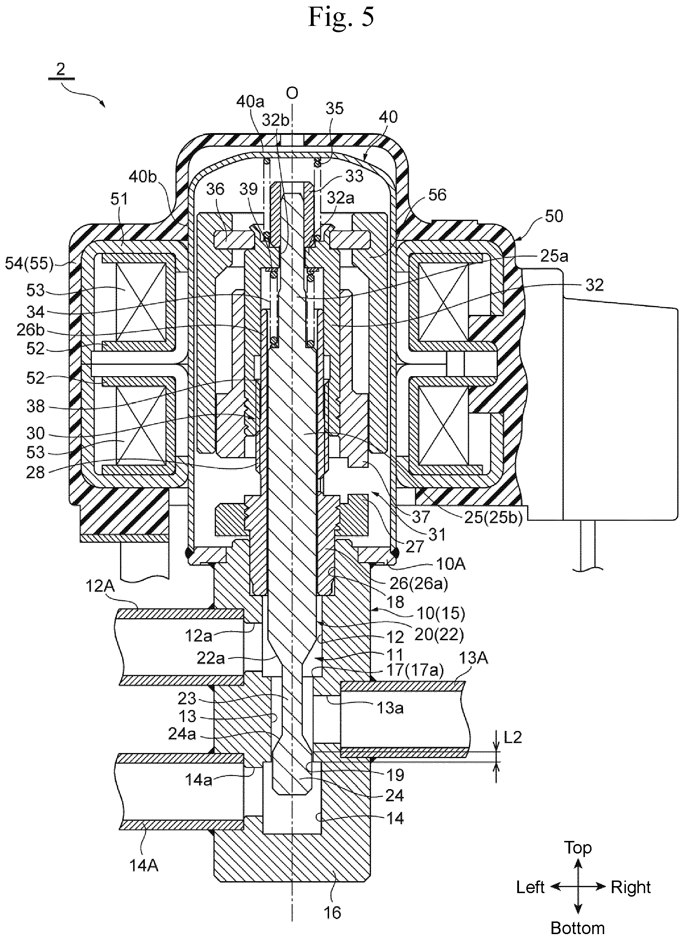

Fig. 4 and Fig. 5 are vertical cross-sectional views each showing a second embodiment of the flow channel switching valve according to the present invention. Fig. 4 shows a valve element in the lowest position, and Fig. 5 shows a valve element in the highest position.

A flow channel switching valve 2 of the second embodiment is basically different from the above-described flow channel switching valve 1 of the first embodiment in the configuration of the upper valve element portion 22 of the valve element 20 and the flow characteristic due to the configuration. Therefore, the configurations equal to those of the first embodiment are denoted by the same reference numerals, and the overlapping descriptions will be omitted. Hereinafter, only the differences will be described in detail.

The flow channel switching valve 2 of the illustrated second embodiment is adapted to switch the flow direction (i.e., flow channel) between the inlet/outlet ports by moving up or down (i.e., vertical movement) the valve element by using a stepping motor as a vertical movement drive unit, and in particular, the flow channel switching valve 2 is a motor-operated valve in which the valve element is seated on the valve orifice (i.e., valve seat) on one side (the downward movement side) of the valve element and is not seated on the valve orifice (i.e., the valve seat) on the other side (the upward movement side) of the valve element.

In the second embodiment, the upper valve element portion 22 of the valve element 20 is formed to have a larger diameter than that of the lower valve element portion 24 (in the illustrated example, the same diameter as that of the lower large-diameter sliding portion 25b of the valve stem 25), and to have a larger diameter than that of the inside diameter (that is, the valve orifice diameter of the upper valve orifice 17 and the lower valve orifice 19) of the intermediate diameter-reduced portion 13 of the valve body 10. Therefore, the inverted truncated cone-shaped upper tapered face portion 22a (formed of an inverted truncated cone face) provided in the lower part of the upper valve element portion 22 is adapted to be moved into contact with or away from the upper end (i.e., the upper end of the upper valve orifice 17) of the intermediate diameter-reduced portion 13, and the upper valve orifice 17 is adapted to be opened or closed by the upper valve element portion 22 (or the upper tapered face portion 22a thereof). That is, in the present embodiment, the upper end (i.e., the upper end of the upper valve orifice 17) of the intermediate diameter-reduced portion 13 acts as a valve seat 17a on which the upper valve element portion 22 (or the upper tapered face portion 22a thereof) is seated.

It should be noted that in the present embodiment, as described above, the valve element 20 is moved into contact with or away from the valve seat 17a provided in the valve body 10, and thus preferably the valve element 20 (i.e., the valve stem 25) and the valve body 10 are made from, for example, metal material such as SUS or brass.

In the second embodiment, when the upper valve element portion 22 (or the upper tapered face portion 22a thereof) is seated on the upper valve orifice 17 (or the valve seat 17a thereof) and the valve element 20 is in the lowest position, the lower end of the valve element 20 (or the lower valve element portion 24 thereof) does not come into contact with the bottom portion 16 of the valve body 10 and a gap of a predetermined size is formed between the lower end of the valve element 20 and the bottom portion 16 of the valve body 10.

Also in the second embodiment, the lower valve element portion 24 (or the outside diameter thereof) of the valve element 20 is formed to have a smaller diameter than the inside diameter (that is, the valve orifice diameter of the upper valve orifice 17 and the lower valve orifice 19) of the intermediate diameter-reduced portion 13 of the valve body 10. Thus, in assembling the flow channel switching valve, for example, the lower valve element portion 24 of the valve element 20 can be inserted into the inside of the lower valve orifice 19 via the upper valve orifice 17, and thus the valve element 20 can be inserted into the valve chamber 11 and disposed in a predetermined position within the valve chamber 11 (in one direction) from the upper side of the valve body 10 (i.e., the open upper face of the cylindrical portion 15).

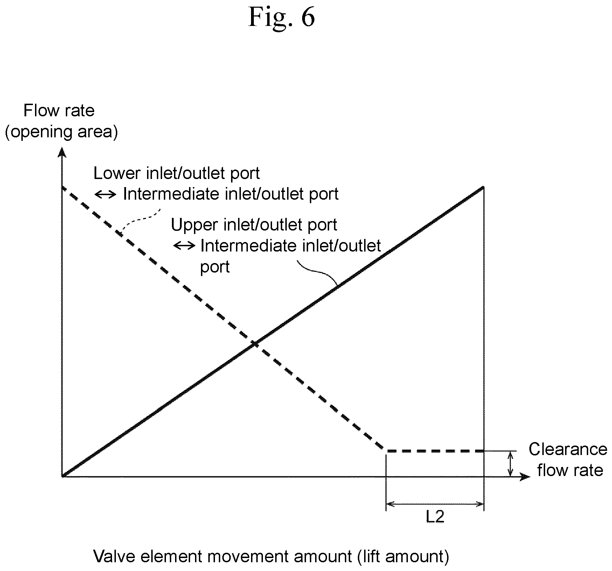

Also in the flow channel switching valve 2 with such a configuration, as in the aforementioned flow channel switching valve 1 of the first embodiment, the stator 55 (or the stator coil 53 thereof) is controlled to be energized (supplied with pulses), whereby the valve stem 25 (and the valve element 20) is moved up or down (while rotating). This increases or decreases the gap between the upper valve element portion 22 and the upper valve orifice 17 and the gap between the lower valve element portion 24 and the lower valve orifice 19, thus adjusting the flow rate of a fluid such as a refrigerant flowing through the upper valve orifice 17 and the lower valve orifice 19. That is, in this example as well, the number of pulses to be supplied (corresponding to the number of rotations of the rotor 56) is controlled to change a lift amount (valve opening degree) of the valve element 20 extended below the valve stem 25. This can (simultaneously) adjust the flow rate of the fluid flowing through the upper valve orifice 17 and the lower valve orifice 19 (see Fig. 6).

In addition, when the valve element 20 is in the highest position as illustrated in Fig. 5, the upper valve element portion 22 of the valve element 20 is positioned in the upper diameter-expanded portion 12 above the upper valve orifice 17, and the upper part (i.e., the lower tapered face portion 24a and a columnar portion having a vertical length L2 below the lower tapered face portion 24a) of the lower valve element portion 24 of the valve element 20 is inserted into the lower valve orifice 19 (with a gap of a predetermined size) (that is, the lower valve orifice 19 will not be closed). Thus, the fluid such as a refrigerant basically flows between the upper inlet/outlet port 12a and the intermediate inlet/outlet port 13a via the upper valve orifice 17, and even when the valve element 20 is in the highest position (normally, the lower valve orifice 19 is in the valve closed position), a (cylindrical) gap (also referred to as a bleed flow channel) is formed between the lower valve element portion 24 of the valve element 20 and the lower valve orifice 19, and thus a predetermined amount of a flow rate (also referred to as a clearance flow rate) passing between the lower inlet/outlet port 14a and the intermediate inlet/outlet port 13a may be ensured (see Fig. 6).

Meanwhile, in the flow channel switching valve 2 of the present embodiment with the above configuration, when the upper valve element portion 22 (or the upper tapered face portion 22a thereof) is seated on (abuts) the upper valve orifice 17 (or the valve seat 17a thereof) and the valve element 20 is in the lowest position as illustrated in Fig. 4, the lower valve element portion 24 of the valve element 20 is positioned in the lower diameter-expanded portion 14 below the lower valve orifice 19, and the upper valve orifice 17 is closed by the upper tapered face portion 22a provided in the lower part of the upper valve element portion 22. Thus, the fluid such as a refrigerant flows only between the lower inlet/outlet port 14a and the intermediate inlet/outlet port 13a via the lower valve orifice 19, and the flow of the fluid between the upper inlet/outlet port 12a and the intermediate inlet/outlet port 13a via the upper valve orifice 17 will be blocked (see Fig. 6).

It should be noted that the flow characteristic illustrated in Fig. 6 is one of examples, and it is needless to describe in detail that various flow characteristics may be achieved by adjusting dimensions, shapes, arrangements, structures, and the like of the valve element 20 and the valve body 10 as appropriate.

As described above, also in the flow channel switching valve 2 of the second embodiment, the lower valve element portion 24 provided in the valve element 20 on the opposite side of the stepping motor 50 forming the vertical movement drive unit is formed to have a smaller diameter than that of the upper valve orifice 17 and the lower valve orifice 19, and can be inserted into the inside of the lower valve orifice 19 (with a gap of a predetermined size) via the upper valve orifice 17, and thus the valve element 20 can be inserted into the valve chamber 11 and disposed in a predetermined position within the valve chamber 11 (in one direction) from the upper side of the valve body 10. Therefore, the flow channel switching valve 2 of the present embodiment has a simple structure and is easy to assemble, and thus can reduce the component cost or assembly cost.

### [Third embodiment]

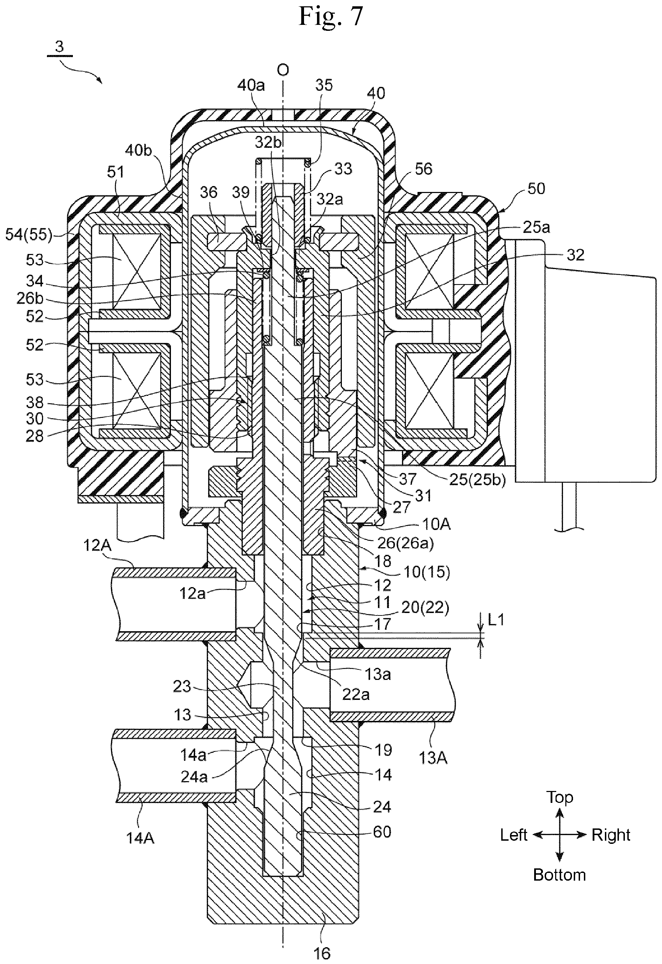

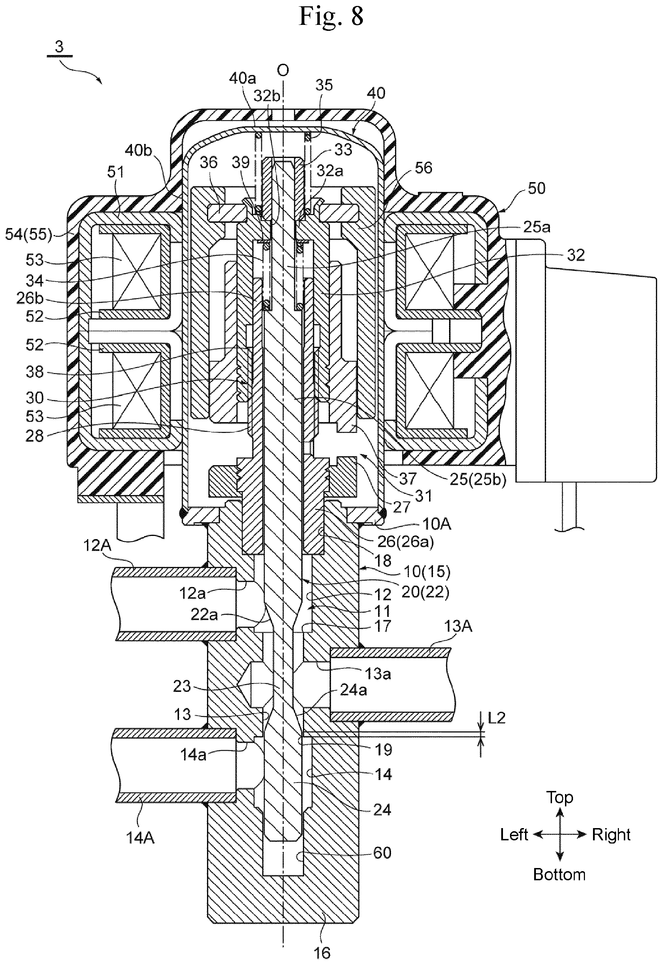

Fig. 7 and Fig. 8 are vertical cross-sectional views each showing a third embodiment of the flow channel switching valve according to the present invention. Fig. 7 shows a valve element in the lowest position, and Fig. 8 shows a valve element in the highest position.

A flow channel switching valve 3 of the third embodiment is basically different from the above-described flow channel switching valve 1 of the first embodiment in the configuration of the bottom portion 16 of the valve body 10 and the lower end of the valve element 20. Therefore, the configurations equal to those of the first embodiment are denoted by the same reference numerals, and the overlapping descriptions will be omitted. Hereinafter, only the differences will be described in detail.

In the flow channel switching valve 3 of the illustrated third embodiment, the bottom portion 16 of the valve body 10 and the lower end (specifically, the lower valve element portion 24) of the valve element 20 are formed to have a vertical length greater than that of the above-described first embodiment.

A valve element guide hole (i.e., valve element guide portion) 60 of a vertically elongated (long in the axis O direction) cylindrical cavity having a smaller diameter than that of the lower diameter-expanded portion 14 is provided in the center of the bottom portion 16 (or the upper face thereof) of the valve body 10, in other words, below the lower diameter-expanded portion 14 of the valve chamber 11 formed in the valve body 10.

In addition, the valve element guide hole 60 is formed to have a slightly larger diameter than that of the lower end (specifically, the lower valve element portion 24) of the valve element 20. The lower end (specifically, the lower part or the entire part of the lower valve element portion 24) of the valve element 20 is inserted into the valve element guide hole 60 in a vertically movable manner with a small gap. That is, in the present embodiment, the valve element guide hole 60 acts as a valve element guide portion for limiting (restricting) the movement of the lower part of the valve element 20 in the lateral direction (i.e., a direction perpendicular to the vertical movement direction (the axis O direction)) (i.e., for limiting the lateral movement of the lower part of the valve element 20).

In this example, the vertical length of the valve element guide hole 60 (and the valve element 20) is set such that the lower end of the valve element 20 is normally inserted into the valve element guide hole 60 while the valve element 20 is moved between the lowest position and the highest position. However, to reduce the vertical length of the valve body 10 and the valve element 20, for example, the lower end of the valve element 20 may be inserted into the valve element guide hole 60 when the valve element 20 is in the lowest position, and the lower end of the valve element 20 may be released from the valve element guide hole 60 (toward to the valve chamber 11) when the valve element 20 is in the highest position.

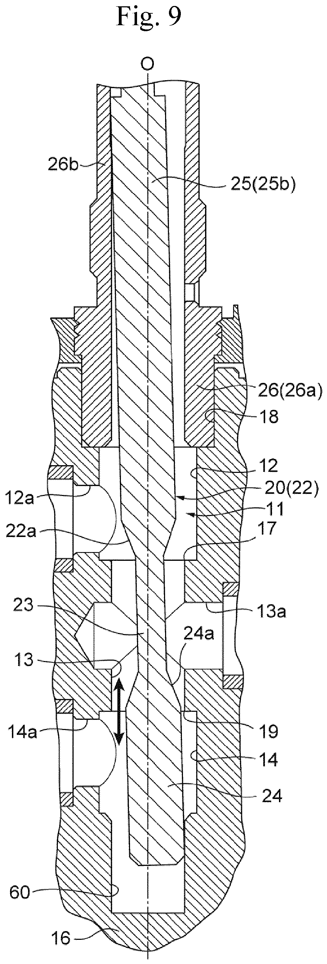

Furthermore, the inside diameter (i.e., hole diameter) of the valve element guide hole 60 (that is, a clearance between the inner wall of the valve element guide hole 60 and the outer periphery of the lower end of the valve element 20) is set such that even when the valve element 20 (i.e., the valve stem 25) is inclined (with respect to the axis O), the upper valve element portion 22 and the upper valve orifice 17 or the lower valve element portion 24 and the lower valve orifice 19 do not normally come into contact with each other in the aforementioned bleed flow channel portion (see Fig. 9).

For example, as the valve element becomes longer, its runout increases, and it is likely to cause vibrations of the valve element or locking of the valve element, for example. However, since the valve element guide hole 60 having the lower end of the valve element 20 inserted thereinto is provided in the bottom portion 16 of the (closed-bottomed cylindrical) valve body 10 as the valve element guide portion for limiting the lateral movement of the lower part of the valve element 20, the flow channel switching valve 3 of the third embodiment can not only produce the same operational advantage as that of the flow channel switching valve 1 of the first embodiment, but also suppress the vibration noise of the valve element 20, operation failures such as locking of the valve element, scratching of the valve element 20, for example, and thus can achieve a stable flow rate.

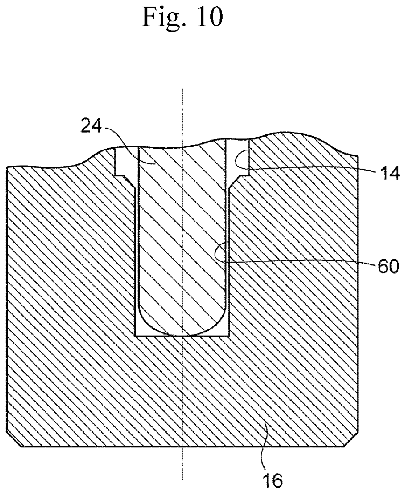

It should be noted that when the valve element guide hole (i.e., the valve element guide portion) 60 is provided, if the operation resistance increases and the valve element 20 becomes short of operating torque (from the lowest position, for example), it is possible to reduce the contact area of the lower part of the valve element 20 to reduce the initial operation resistance by tapering (also referred to as chamfering) or rounding the corner portion of the lower end of the valve element 20, or by, for example, forming the lower end of the valve element 20 (or the lower valve element portion 24 thereof) of a curved face as a part of a sphere (see Fig. 10), and the like.

In the third embodiment, description has been given of the aspect of adding the valve element guide hole (i.e., the valve element guide portion) to the motor-operated valve in which the valve element is not seated on the valve orifice (i.e., the valve seat) on the opposite sides (the downward movement side and the upward movement side) of the valve element. However, it is needless to describe in detail that the valve element guide hole (i.e., the valve element guide portion) similar to the one of the present embodiment may also be added to the motor-operated valve in which the valve element is seated on the valve orifice (i.e., the valve seat) on one side (the downward movement side) of the valve element and the valve element is not seated on the valve orifice (i.e., the valve seat) on the other side (the upward movement side) of the valve element.

In the above embodiment, the valve element 20 (the valve stem 25) and the valve body 10 each has a single-component (single-member) configuration to reduce the number of components. However, it is needless to mention that the valve element 20 (the valve stem 25) and the valve body 10 may each have a multicomponent (multi-member) configuration. For example, the upper valve element portion 22, the intermediate neck portion 23, and the lower valve element portion 24 forming the valve element 20 may be prepared as individual components, and the components may be assembled into the valve element 20.

### [Fourth embodiment]

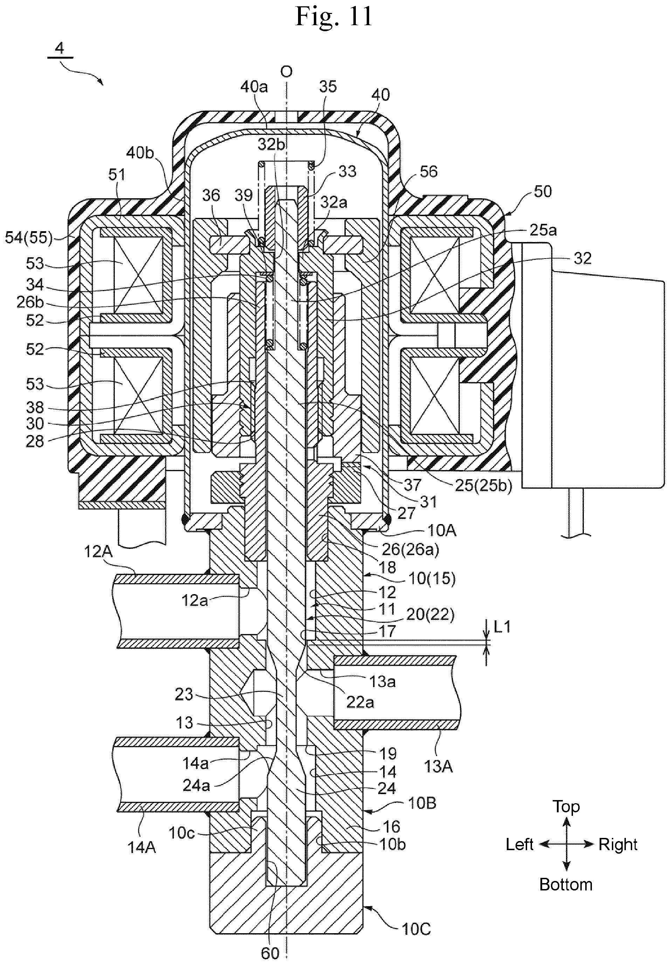

Fig. 11 is a vertical cross-sectional view showing a fourth embodiment of the flow channel switching valve according to the present invention.

A flow channel switching valve 4 of the fourth embodiment is basically different from the above-described flow channel switching valve 3 of the third embodiment in the configuration around the bottom portion 16 of the valve body 10. Therefore, the configurations equal to those of the third embodiment are denoted by the same reference numerals, and the overlapping descriptions will be omitted. Hereinafter, only the differences will be described in detail.

In the flow channel switching valve 4 of the illustrated fourth embodiment, the valve body 10 has a two-component (two-member) configuration as compared the above-described third embodiment in which the valve body 10 has a single-component (single-member) configuration.

Specifically, the valve body 10 includes a cylindrical trunk member 10B including the valve chamber 11 (i.e., the upper diameter-expanded portion 12, the intermediate diameter-reduced portion 13, and the lower diameter-expanded portion 14) and having a stepped inner periphery and an open bottom face (i.e., lower face), and a thick cap-like bottom cap member 10C provided below the trunk member 10B to hermetically close a bottom opening 10b (i.e., an opening continuous to the lower side of the lower diameter-expanded portion 14) of the trunk member 10B. In the present embodiment, the bottom opening 10b of the trunk member 10B is formed to have a larger diameter than that of the lower diameter-expanded portion 14.

In addition, a fitting protrusion 10c, which is (hermetically) fitted (internally fitted) into the bottom opening 10b, is provided (upwardly) in the center of the upper face of the bottom cap member 10C. Like the above-described third embodiment, a closed-bottomed valve element guide hole (i.e., valve element guide portion) 60, to which the lower end of the valve element 20 is inserted in a vertically movable manner with a small gap, is formed in the center of the upper face of the fitting protrusion 10c.

As described above, since the valve element guide hole 60 is provided as the valve element guide portion for limiting the lateral movement of the lower part of the valve element 20, also the flow channel switching valve 4 of the fourth embodiment can produce the same operational advantage as that of the flow channel switching valve 3 of the third embodiment. In addition, since the valve element guide hole 60 is formed in the bottom cap member 10C (or the fitting protrusion 10c thereof) in the valve body 10 having a two-component (two-member) configuration, the formation of the valve element guide hole 60 can be achieved more easily, and the flow channel switching valve 4 of the fourth embodiment can reduce the production cost and component cost and improve the formation accuracy of the valve element guide hole 60.

### [Fifth embodiment]

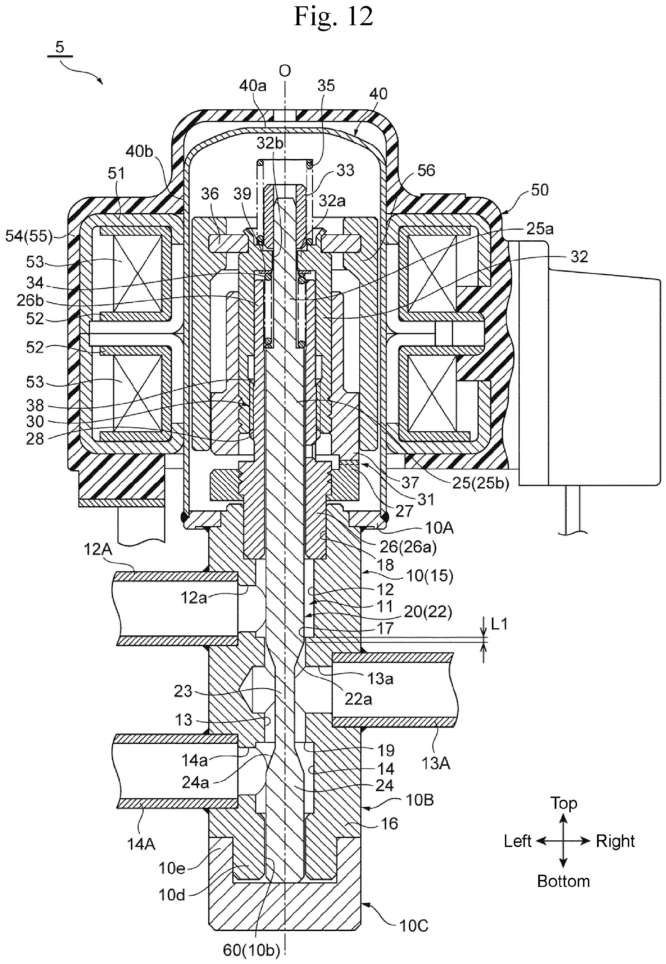

Fig. 12 is a vertical cross-sectional view showing a fifth embodiment of the flow channel switching valve according to the present invention.

A flow channel switching valve 5 of the fifth embodiment is basically different from the above-described flow channel switching valves 3, 4 of the third and fourth embodiments in the configuration around the bottom portion 16 of the valve body 10. Therefore, the configurations equal to those of the third and fourth embodiments are denoted by the same reference numerals, and the overlapping descriptions will be omitted. Hereinafter, only the differences will be described in detail.

In the flow channel switching valve 5 of the illustrated fifth embodiment, the valve body 10 has a two-component (two-member) configuration like the above-described fourth embodiment, but the bottom opening 10b of the trunk member 10B is formed to have a smaller diameter than that of the lower diameter-expanded portion 14.

In addition, the lower part of the trunk member 10B has a reduced diameter (i.e., lower diameter-reduced portion 10d), and the fitting protrusion 10c in the center of the upper face of the bottom cap member 10C is omitted. An upper cylindrical portion 10e, which is (hermetically) fitted to (externally fitted around) the lower diameter-reduced portion 10d of the trunk member 10B, is provided (upwardly) on the outer periphery of the upper face of the bottom cap member 10C.

In the present embodiment, a closed-bottomed valve element guide hole (i.e., valve element guide portion) 60, to which the lower end of the valve element 20 is inserted in a vertically movable manner with a small gap, like the above-described third and fourth embodiments, is formed by the bottom opening 10b (or the inner face thereof) of the trunk member 10B and the bottom cap member 10C (or the upper face thereof (i.e., a flat face in the illustrated example)).

As described above, since the valve element guide hole 60 is provided as the valve element guide portion for limiting the lateral movement of the lower part of the valve element 20, and the bottom opening 10b of the trunk member 10B and the bottom cap member 10C of the valve body 10 having a two-component (two-member) configuration form the valve element guide hole 60, it is needless to mention that also the flow channel switching valve 5 of the fifth embodiment can produce the same operational advantage as that of the flow channel switching valves 3, 4 of the third and fourth embodiments.

In the above embodiments, for the sake of simplicity of the configurations, a direct-acting vertical movement drive unit for moving up or down the valve element 20 is employed. However, a gear type vertical movement drive unit may also be employed such as a mechanical paradox planetary gear reduction mechanism, for example.

### Reference Signs List

- 1: Flow channel switching valve (first embodiment)
- 2: Flow channel switching valve (second embodiment)
- 10: Valve body
- 10B: Trunk member (fourth, fifth embodiments)
- 10b: Bottom opening (fourth, fifth embodiments)
- 10C: Bottom cap member (fourth, fifth embodiments)
- 10c: Fitting protrusion (fourth embodiment)
- 10d: Lower diameter-reduced portion (fifth embodiment)
- 10e: Upper cylindrical portion (fifth embodiment)
- 11: Valve chamber
- 12: Upper diameter-expanded portion
- 12a: Upper inlet/outlet port
- 13: Intermediate diameter-reduced portion
- 13a: Intermediate inlet/outlet port
- 14: Lower diameter-expanded portion
- 14a: Lower inlet/outlet port
- 15: Cylindrical portion
- 16: Bottom portion (lower stopper)
- 17: Upper valve orifice
- 17a: Valve seat (second embodiment)
- 18: Fitting hole
- 19: Lower valve orifice
- 20: Valve element
- 22: Upper valve element portion
- 22a: Upper tapered face portion
- 23: Intermediate neck portion
- 24: Lower valve element portion
- 24a: Lower tapered face portion
- 25: Valve stem
- 25a: Upper small-diameter fit-inserted portion
- 25b: Lower large-diameter sliding portion
- 26: Guide bush
- 27: Lower stopper element (fixed stopper)
- 28: Fixed thread portion (external thread portion)
- 30: Thread feeding mechanism
- 31: Stopper mechanism
- 32: Valve stem holder
- 34: Compression coil spring
- 37: Upper stopper element (movable stopper)
- 38: Movable thread portion (internal thread portion)
- 40: Can
- 50: Stepping motor
- 55: Stator
- 56: Rotor
- 60: Valve element guide hole (valve element guide portion) (third to fifth embodiments)

## Claims

1. A flow channel switching valve (1, 2) comprising:
a valve body (10) including a valve chamber (11), an upper inlet/outlet port (12a), an intermediate inlet/outlet port (13a), and a lower inlet/outlet port (14a) opening in the valve chamber (11), an upper valve orifice (17) provided between the upper inlet/outlet port (12a) and the intermediate inlet/outlet port (13a), and a lower valve orifice (19) provided between the intermediate inlet/outlet port (13a) and the lower inlet/outlet port (14a);
a valve element (20) disposed in the valve chamber (11) in a vertically movable manner and including an upper valve element portion (22) and a lower valve element portion (24) separated from each other in a vertical movement direction, the upper valve element portion (22) and the lower valve element portion (24) being adapted to control a flow rate of a fluid flowing through the upper valve orifice (17) and the lower valve orifice (19); and
a vertical movement drive unit provided on an upper side of the valve element (20) so as to move up or down the valve element (20),
wherein the lower valve element portion (24) is formed to have a smaller diameter than that of the upper valve orifice (17) and the lower valve orifice (19), and can be inserted into an inside of the lower valve orifice (19) through the upper valve orifice (17), and
a bottom portion of the valve body (10) is a lower stopper adapted to define a lowest position of the valve element, **characterized in that**
the vertical movement drive unit includes
a stepping motor (50) including a stator (55) and a rotor (56), wherein a valve stem holder (32) and the rotor (56) are coupled together by a support ring (36),
a thread feeding mechanism (30) including a fixed thread portion (28) formed on the outer periphery of a guide bush (26) that is securely fitted by press-fitting at the lower end (26a) thereof to the fitting hole (18) provided in the center of the upper part of the valve body (10) and a movable thread portion (38) formed on the inner periphery of the valve stem holder (32) and screwed into the fixed thread portion (28), and
a stopper mechanism (31) for limiting the rotation and downward movement of the valve stem holder (32), said stopper mechanism (31) including a lower stopper element (27) securely attached to the outer periphery of the guide bush (26) and an upper stopper element (37) securely attached to the outer periphery of the valve stem holder (32).

2. The flow channel switching valve according to claim 1, wherein:
the vertical movement drive unit further includes a compression coil spring (34) for shock absorption adapted to always urge the valve element (20) in a valve closing direction, an upper small-diameter fit-inserted portion (25a) of the valve stem (25) is inserted through an insertion through-hole (32b) formed in the center of a ceiling portion (32a) of the valve stem holder (32),
and the compression coil spring (34) is externally arranged around the upper small-diameter fit-inserted portion (25a) of the valve stem (25) and disposed in a compressed state between the ceiling portion (32a) of the valve stem holder (32) and an upper end terrace face of a lower large-diameter sliding portion (25b) of the valve stem (25).

3. The flow channel switching valve according to claim 1 or 2, wherein the upper valve element portion (22) is formed to have a smaller diameter than that of the upper valve orifice (17) and can be inserted into an inside of the upper valve orifice (17).

4. The flow channel switching valve according to any one of claims 1 to 3, wherein a lower end of the valve element (20) adapted to abut the bottom portion of the valve body (10) is formed of a plane face.

5. The flow channel switching valve according to any one of claims 1 to 4, wherein the upper valve element portion (22) is formed to have a larger diameter than that of the upper valve orifice (17) and is adapted to be moved into contact with or away from a valve seat (17a) provided in the upper valve orifice (17).

6. The flow channel switching valve according to any one of claims 1 to 5, wherein an intermediate neck portion (23) is provided between the upper valve element portion (22) and the lower valve element portion (24), the intermediate neck portion (23) having a smaller diameter than that of the upper valve element portion (22) and the lower valve element portion (24).

7. The flow channel switching valve according to claim 6, wherein a truncated cone-shaped tapered face portion continuous to the intermediate neck portion is provided in at least one of the upper valve element portion (22) and the lower valve element portion (24).

8. The flow channel switching valve according to claim 1, wherein the upper valve element portion (22) has an outside diameter equal to that of the lower valve element portion (24).

9. The flow channel switching valve according to claim 1, wherein the upper valve element portion (22) is formed to have a larger diameter than that of the lower valve element portion (24).

10. The flow channel switching valve according to any one of claims 1 to 9, wherein a space between the upper valve orifice (17) and the lower valve orifice (19) is formed of a cylindrical face.

11. The flow channel switching valve according to claim 10,
wherein:
the valve chamber (11) includes an upper diameter-expanded portion (12) having a relatively large diameter, a lower diameter-expanded portion (14) having a relatively large diameter, and an intermediate diameter-reduced portion (13) having a relatively small diameter, the upper diameter-expanded portion (12) having the upper inlet/outlet port (12a) and having the upper valve element portion (22) disposed therein, the lower diameter-expanded portion (14) having the lower inlet/outlet port (14a) and having the lower valve element portion (24) disposed therein, the intermediate diameter-reduced portion (13) having the intermediate inlet/outlet port (13a) and being provided between the upper diameter-expanded portion (12) and the lower diameter-expanded portion (14); and
a step portion formed between the upper diameter-expanded portion (12) and the intermediate diameter-reduced portion (13) is the upper valve orifice (17) and a step portion formed between the lower diameter-expanded portion (14) and the intermediate diameter-reduced portion (13) is the lower valve orifice (19).

12. The flow channel switching valve according to any one of claims 1 to 11, wherein the valve element (20) has a single-component configuration.

13. The flow channel switching valve according to any one of claims 1 to 12, wherein the valve body (10) has a single-component configuration.

14. The flow channel switching valve according to claim 1, wherein the valve body (10) includes a valve element guide portion (60) for limiting a lateral movement of a lower part of the valve element (20).

15. The flow channel switching valve according to claim 14, wherein a bottom portion of the valve body (10) includes a valve element guide hole (60) as the valve element guide portion, the valve element guide hole (60) having a lower end of the valve element (20) inserted thereinto.

16. The flow channel switching valve according to claim 15, wherein the lower end of the valve element (20) is inserted into the valve element guide hole (60) while the valve element (20) is moved between a lowest position and a highest position.

17. The flow channel switching valve according to claim 15 or 16, wherein the lower end of the valve element (20) is formed of a curved face.

18. The flow channel switching valve according to any one of claims 15 to 17, wherein the valve body (10) includes a trunk member (10B) and a bottom cap member (10C), the trunk member (10B) including the valve chamber (11) and having a bottom opening (10b), the bottom cap member (10C) being adapted to hermetically close the bottom opening (10b)of the trunk member (10B).

19. The flow channel switching valve according to claim 18, wherein the valve element guide hole (60) is provided in the bottom cap member (10C).

20. The flow channel switching valve according to claim 19, wherein the valve element guide hole (60) is provided in a fitting protrusion (10c) of the bottom cap member (10C), the fitting protrusion (10c) being adapted to be fitted into the bottom opening (10b).

21. The flow channel switching valve according to claim 18, wherein the valve element guide hole (60) is formed of the bottom opening (10b) of the trunk member (10B) and the bottom cap member (10C).

## Patentansprüche

1. Strömungskanal-Umschaltventil (1,2), umfassend:
einen Ventilkörper (10), umfassend eine Ventilkammer (11), eine obere Einlass-/Auslassöffnung (12a), eine mittlere Einlass-/Auslassöffnung (13a) und eine untere Einlass-/Auslassöffnung (14a), die sich in die Ventilkammer (11) öffnen, eine obere Ventilöffnung (17), die zwischen der oberen Einlass-/Auslassöffnung (12a) und der mittleren Einlass-/Auslassöffnung (13a) angeordnet ist, und eine untere Ventilöffnung (19), zwischen der mittleren Einlass-/Auslassöffnung (13a) und der unteren Einlass-/Auslassöffnung (14a) angeordnet ist;
ein Ventilelement (20), das in der Ventilkammer (11) vertikal beweglich angeordnet ist und einen oberen Ventilelementteil (22) und einen unteren Ventilelementteil (24) umfasst, die voneinander in der vertikalen Bewegungsrichtung getrennt sind, wobei der obere Ventilelementteil (22) und der untere Ventilelementteil (24) dazu ausgebildet sind, einen Strömungsdurchsatz eines Fluids zu steuern, das durch die obere Ventilöffnung (17) und die untere Ventilöffnung (19) strömt; und
eine vertikale Bewegungsantriebseinheit, die auf einer oberen Seite des Ventilelements (20) vorgesehen ist, um das Ventilelement (20) aufwärts oder abwärts zu bewegen,
wobei der untere Ventilelementteil (24) derart geformt ist, dass er einen kleineren Durchmesser aufweist als derjenige der oberen Ventilöffnung (17) und der unteren Ventilöffnung (19), und welcher in die untere Ventilöffnung (19) durch die obere Ventilöffnung (17) eingesetzt werden kann, und
wobei ein Bodenbereich des Ventilkörpers (10) ein unterer Anschlag ist, dazu ausgebildet, eine tiefste Position des Ventilelements festzulegen, **dadurch gekennzeichnet,**
**dass** die vertikale Bewegungsantriebseinheit umfasst:
einen Schrittmotor (50), umfassend einen Stator (55) und einen Rotor (56), wobei ein Ventilstößelhalter (32) und der Rotor (56) miteinander durch einen Lagerring (36) gekoppelt sind,
einen Gewindevorschubmechanismus (30), umfassend einen feststehenden Gewindeteil (28), der auf dem äußeren Umfang einer Führungsbuchse (26) ausgebildet ist, die an ihrem unteren Ende (26a) durch Verpressen fest mit dem Haßloch (18) verbunden ist, das in der Mitte des oberen Teils des Ventilkörpers (10) vorgesehen ist,
und einen beweglichen Gewindeteil (38), der auf dem inneren Umfang des Ventilstößelhalters (32) vorgesehen ist und in den feststehenden Gewindeteil (28) eingeschraubt ist, und
einen Anschlagsmechanismus (31) zur Begrenzung der Drehung und Abwärtsbewegung des Ventilstößelhalters (32), welcher Anschlagsmechanismus (31) ein unteres Anschlagselement (27) umfasst, welches fest am äußeren Umfang der Führungsbuchse (26) angebracht ist, und ein oberes Anschlagselement (37), welches fest am äußeren Umfang des Ventilstößelhalters (32) angebracht ist.

2. Strömungskanal-Umschaltventil gemäß Anspruch 1,
bei welchem die vertikale Bewegungsantriebseinheit ferner eine Kompressionsschraubenfeder (34) zur Stoßdämpfung umfasst, dazu vorgesehen, ständig das Ventilelement (20) in einer Ventilschließrichtung zu drücken, wobei ein oberer eingepasster Teil (25a) des Ventilstößels (25) kleinen Durchmessers durch ein Einsatz-Durchgangsloch (32b) in der Mitte eines Deckenbereichs (32a) des Ventilstößelhalters (32) eingesetzt ist,
und die Kompressionsschraubenfeder (34) außen um den oberen eingepassten Teil (25a) kleinen Durchmessers des Ventilstößels (25) herum angeordnet ist und in einem komprimierten Zustand zwischen dem Deckenbereich (32a) des Ventilstößelhalters (32) und einer Terrassenfläche am oberen Ende eines Gleitteils (25b) großen Durchmessers des Ventilstößels (25) angeordnet ist.

3. Strömungskanal-Umschaltventil gemäß Anspruch 1 oder 2, bei welchem der obere Ventilelementteil (22) derart ausgebildet ist, dass er einen kleineren Durchmesser aufweist als derjenige der oberen Ventilöffnung (17) und in die obere Ventilöffnung (17) eingesetzt werden kann.

4. Strömungskanal-Umschaltventil gemäß einem der Ansprüche 1 bis 3, bei welchem ein unteres Ende des Ventilelements (20), welches dazu vorgesehen ist, am Bodenbereich des Ventilkörpers (10) anzuschlagen, als eine ebene Fläche ausgebildet ist.

5. Strömungskanal-Umschaltventil gemäß einem der Ansprüche 1 bis 4, bei welchem der obere Ventilelementteil (22) derart ausgebildet ist, dass er einen größeren Durchmesser aufweist als derjenige der oberen Ventilöffnung (17) und dazu ausgebildet ist, in Kontakt mit einem Ventilsitz (17a) in der oberen Ventilöffnung (17) oder davon weg bewegt zu werden.

6. Strömungskanal-Umschaltventil gemäß einem der Ansprüche 1 bis 5, bei welchem ein mittlerer Halsteil (23) zwischen dem oberen Ventilelementteil (22) und dem unteren Ventilelementteil (24) vorgesehen ist, welcher mittlere Halsteil (23) einen kleineren Durchmesser als der obere Ventilelementteil (22) und der untere Ventilelementteil (24) aufweist.

7. Strömungskanal-Umschaltventil gemäß Anspruch 6, bei welchem ein abgeschnittener kegelstumpfförmiger konischer Flächenteil, der sich an den mittleren Halsteil anschließt, an zumindest einem von dem oberen Ventilelementteil (22) und dem unteren Ventilelementteil (24) vorgesehen ist.

8. Strömungskanal-Umschaltventil gemäß Anspruch 1, bei welchem der obere Ventilelementteil (22) einen Außendurchmesser aufweist, der gleich demjenigen des unteren Ventilelementteils (24) ist.

9. Strömungskanal-Umschaltventil gemäß Anspruch 1, bei welchem der obere Ventilelementteil (22) derart ausgebildet ist, dass er einen größeren Durchmesser aufweist als derjenige des unteren Ventilelementteils (24).

10. Strömungskanal-Umschaltventil gemäß einem der Ansprüche 1 bis 9, bei welchem ein Raum zwischen der oberen Ventilöffnung (17) und der oberen Ventilöffnung (19) aus einer zylindrischen Fläche gebildet wird.

11. Strömungskanal-Umschaltventil gemäß Anspruch 10,
bei welchem die Ventilkammer (11) einen oberen Teil (12) mit erweitertem Durchmesser umfasst, welche einen relativ großen Durchmesser aufweist, einen unteren Teil (14) erweiterten Durchmessers, welcher einen relativ großen Durchmesser aufweist, und einen mittleren Teil (13) reduzierten Durchmessers, der einen relativ kleinen Durchmesser aufweist, umfasst, wobei in dem oberen Teil (12) erweiterten Durchmessers die obere Einlass-/Auslassöffnung (12a) und der obere Ventilelementteil (22) angeordnet sind, in dem unteren Teil (14) erweiterten Durchmessers die untere Einlass-/Auslassöffnung (14a) und der untere Ventilelementteil (24) angeordnet sind, und der mittlere Teil (13) reduzierten Durchmessers die mittlere Einlass-/Auslassöffnung (13a) umfasst und zwischen dem oberen Teil (12) erweiterten Durchmessers und dem unteren Teil (14) erweiterten Durchmessers vorgesehen ist; und
ein Stufenteil zwischen dem oberen Teil (12) erweiterten Durchmessers und dem mittleren Teil (13) reduzierten Durchmessers die obere Ventilöffnung (17) bildet, und ein Stufenteil zwischen dem unteren Teil (14) erweiterten Durchmessers und dem mittleren Teil (13) reduzierten Durchmessers die untere Ventilöffnung (19) bildet.

12. Strömungskanal-Umschaltventil gemäß einem der Ansprüche 1 bis 11, bei welchem das Ventilelement (20) eine Ein-Komponenten-Konfiguration aufweist.

13. Strömungskanal-Umschaltventil gemäß einem der Ansprüche 1 bis 12, bei welchem der Ventilkörper (10) eine Ein-Komponenten-Konfiguration aufweist.

14. Strömungskanal-Umschaltventil gemäß Anspruch 1, bei welchem der Ventilkörper (10) einen Ventilelement-Führungsteil (60) zur Begrenzung einer seitlichen Bewegung eines unteren Teils des Ventilelements (20) umfasst.

15. Strömungskanal-Umschaltventil gemäß Anspruch 14, bei welchem ein Bodenbereich des Ventilkörpers (10) ein Ventilelement-Führungsloch (60) als Ventilelement-Führungsteil umfasst, in welches Ventilelement-Führungsloch (60) ein unteres Ende des Ventilelements (20) eingesetzt ist.

16. Strömungskanal-Umschaltventil gemäß Anspruch 15, bei welchem das untere Ende des Ventilelements (20) in das Ventilelement-Führungsloch (60) eingesetzt ist, während das Ventilelement (20) zwischen einer untersten Position und einer höchsten Position bewegt wird.

17. Strömungskanal-Umschaltventil gemäß Anspruch 15 oder 16, bei welchem das untere Ende des Ventilelements (20) als eine gekrümmte Fläche ausgebildet ist.

18. Strömungskanal-Umschaltventil gemäß einem der Ansprüche 15 bis 17, bei welchem der Ventilkörper (10) ein Stammelement (10B) und ein Bodenkappenelement (10C) aufweist, wobei das Stammelement (10B) die Ventilkammer (11) umfasst und eine Bodenöffnung (10b) aufweist, und das Bodenkappenelement (10C) dazu ausgebildet ist, die Bodenöffnung (10b) des Stammelements (10B) dicht zu verschließen.

19. Strömungskanal-Umschaltventil gemäß Anspruch 18, bei welchem das Ventilelement-Führungsloch (60) in dem Bodenkappenelement (10C) vorgesehen ist.

20. Strömungskanal-Umschaltventil gemäß Anspruch 19, bei welchem das Ventilelement-Führungsloch (60) in einem Passvorsprung (10c) des Bodenkappenelements (10C) vorgesehen ist, welcher Passvorsprung (10c) dazu ausgebildet ist, in die Bodenöffnung (10b) eingepasst zu werden.

21. Strömungskanal-Umschaltventil gemäß Anspruch 18, bei welchem das Ventilelement-Führungsloch (60) durch die Bodenöffnung (10b) des Stammelements (10B) und das Bodenkappenelement (10C) gebildet wird.

## Revendications

1. Soupape de commutation de canal d'écoulement (1, 2) comportant :
un corps de soupape (10) incluant une chambre de soupape (11), un orifice d'entrée/sortie supérieur (12a), un orifice d'entrée/sortie intermédiaire (13a) et un orifice d'entrée/sortie inférieur (14a) débouchant dans la chambre de soupape (11), un orifice de soupape supérieur (17) ménagé entre l'orifice d'entrée/sortie supérieur (12a) et l'orifice d'entrée/sortie intermédiaire (13a), et un orifice de soupape inférieur (19) ménagé entre l'orifice d'entrée/sortie intermédiaire (13a) et l'orifice d'entrée/sortie inférieur (14a) ;
un élément de soupape (20) disposé dans la chambre de soupape (11) d'une manière verticalement mobile et incluant une portion d'élément de soupape supérieure (22) et une portion d'élément de soupape inférieure (24) séparées l'une de l'autre dans une direction de déplacement verticale, la portion d'élément de soupape supérieure (22) et la portion d'élément de soupape inférieure (24) étant adaptées pour réguler un débit d'un fluide s'écoulant à travers l'orifice de soupape supérieur (17) et l'orifice de soupape inférieur (19) ; et
une unité d'entraînement pour un déplacement vertical agencée sur un côté supérieur de l'élément de soupape (20) de manière à déplacer l'élément de soupape (20) vers le haut ou vers le bas,
dans laquelle la portion d'élément de soupape inférieure (24) est formée pour avoir un diamètre plus petit que celui de l'orifice de soupape supérieur (17) et de l'orifice de soupape inférieur (19), et peut être insérée dans un intérieur de l'orifice de soupape inférieur (19) à travers l'orifice de soupape supérieur (17), et
une portion inférieure du corps de soupape (10) est une butée inférieure adaptée pour définir une position la plus basse de l'élément de soupape, **caractérisée en ce que**
l'unité d'entraînement pour un déplacement vertical inclut
un moteur pas à pas (50) incluant un stator (55) et un rotor (56), dans laquelle un support de tige de soupape (32) et le rotor (56) sont couplés ensemble par un anneau de support (36),
un mécanisme d'avance par filetage (30) incluant une portion de filetage fixe (28) formée sur la périphérie extérieure d'une douille de guidage (26) qui est fermement fixée par emmanchement serré sur l'extrémité inférieure (26a) de celle-ci sur le trou de montage (18) ménagé au centre de la partie supérieure du corps de soupape (10), et une portion de filetage mobile (38) formée sur la périphérie intérieure du support de tige de soupape (32) et vissée dans la portion de filetage fixe (28), et
un mécanisme de butée (31) pour limiter la rotation et le mouvement vers le bas du support de tige de soupape (32), ledit mécanisme de butée (31) incluant un élément de butée inférieur (27) fermement fixé à la périphérie extérieure de la douille de guidage (26) et un élément de butée supérieur (37) fixé solidement à la périphérie extérieure du support de tige de soupape (32).

2. Soupape de commutation de canal d'écoulement selon la revendication 1, dans laquelle :
l'unité d'entraînement pour un déplacement vertical inclut en outre un ressort hélicoïdal de compression (34) pour l'absorption de chocs, adapté pour toujours pousser l'élément de soupape (20) dans une direction de fermeture de soupape,
une portion supérieure de petit diamètre (25a), montée par insertion, de la tige de soupape (25) est insérée à travers un trou traversant d'insertion (32b) formé au centre d'une portion de plafond (32a) du support de tige de soupape (32),
et le ressort hélicoïdal de compression (34) est agencé extérieurement autour de la portion supérieure de petit diamètre (25a), montée par insertion, de la tige de soupape et disposé dans un état comprimé entre la portion de plafond (32a) du support de tige de soupape (32) et une face de terrasse d'extrémité supérieure d'une portion coulissante inférieure de grand diamètre (25b) de la tige de soupape (25).

3. Soupape de commutation de canal d'écoulement selon la revendication 1 ou 2, dans laquelle la portion d'élément de soupape supérieure (22) est formée de manière à avoir un diamètre plus petit que celui de l'orifice de soupape supérieur (17) et peut être insérée dans un intérieur de l'orifice de soupape supérieur (17).

4. Soupape de commutation de canal d'écoulement selon l'une quelconque des revendications 1 à 3, dans laquelle une extrémité inférieure de l'élément de soupape (20) adaptée pour venir en butée contre la portion inférieure du corps de soupape (10) est formée d'une face plane.

5. Soupape de commutation de canal d'écoulement selon l'une quelconque des revendications 1 à 4, dans laquelle la portion d'élément de soupape supérieure (22) est formée de manière à avoir un diamètre plus grand que celui de l'orifice de soupape supérieur (17) et est adaptée pour être mise en contact avec un siège de soupape (17a) agencé dans l'orifice de soupape supérieur (17) ou pour être éloignée de celui-ci.

6. Soupape de commutation de canal d'écoulement selon l'une quelconque des revendications 1 à 5, dans laquelle une portion de col intermédiaire (23) est agencée entre la portion d'élément de soupape supérieure (22) et la portion d'élément de soupape inférieure (24), la portion de col intermédiaire (23) ayant un diamètre plus petit que celui de la portion d'élément de soupape supérieure (22) et de la portion d'élément de soupape inférieure (24).

7. Soupape de commutation de canal d'écoulement selon la revendication 6, dans laquelle une portion de face biseautée en forme de cône tronqué, continue à la portion de col intermédiaire est agencée dans au moins une portion parmi la portion d'élément de soupape supérieure (22) et la portion d'élément de soupape inférieure (24).

8. Soupape de commutation de canal d'écoulement selon la revendication 1, dans laquelle la portion d'élément de soupape supérieure (22) a un diamètre extérieur égal à celui de la portion d'élément de soupape inférieure (24).

9. Soupape de commutation de canal d'écoulement selon la revendication 1, dans laquelle la portion d'élément de soupape supérieure (22) est formée de manière à avoir un diamètre plus grand que celui de la portion d'élément de soupape inférieure (24).

10. Soupape de commutation de canal d'écoulement selon l'une quelconque des revendications 1 à 9, dans laquelle un espace entre l'orifice de soupape supérieur (17) et l'orifice de soupape inférieur (19) est formé d'une face cylindrique.

11. Soupape de commutation de canal d'écoulement selon la revendication 10,
dans laquelle :
la chambre de soupape (11) inclut une portion supérieure à diamètre augmenté (12) ayant un diamètre relativement grand, une portion inférieure à diamètre augmenté (14) ayant un diamètre relativement grand, et une portion intermédiaire à diamètre réduit (13) ayant un diamètre relativement petit, la portion supérieure à diamètre augmenté (12) ayant l'orifice d'entrée/sortie supérieur (12a) et ayant la portion d'élément de soupape supérieure (22) disposée dans celle-ci, la portion inférieure à diamètre augmenté (14) ayant l'orifice d'entrée/sortie inférieur (14a) et ayant la portion d'élément de soupape inférieure (24) disposée dans celle-ci, la portion intermédiaire à diamètre réduit (13) ayant l'orifice d'entrée/sortie intermédiaire (13a) et étant agencée entre la portion supérieure à diamètre augmenté (12) et la portion inférieure à diamètre augmenté (14) ; et
une portion de gradin formée entre la portion supérieure à diamètre augmenté (12) et la portion intermédiaire à diamètre réduit (13) est l'orifice de soupape supérieur (17), et une portion de gradin formée entre la portion inférieure à diamètre augmenté (14) et la portion intermédiaire à diamètre réduit (13) est l'orifice de soupape inférieur (19).

12. Soupape de commutation de canal d'écoulement selon l'une quelconque des revendications 1 à 11, dans laquelle l'élément de soupape (20) a une configuration à un seul composant.

13. Soupape de commutation de canal d'écoulement selon l'une quelconque des revendications 1 à 12, dans laquelle le corps de soupape (10) a une configuration à un seul composant.

14. Soupape de commutation de canal d'écoulement selon la revendication 1, dans laquelle le corps de soupape (10) inclut une portion de guidage d'élément de soupape (60) pour limiter un mouvement latéral d'une partie inférieure de l'élément de soupape (20).

15. Soupape de commutation de canal d'écoulement selon la revendication 14, dans laquelle une portion inférieure du corps de soupape (10) inclut un trou de guidage d'élément de soupape (60) en tant que portion de guidage d'élément de soupape, le trou de guidage d'élément de soupape (60) ayant une extrémité inférieure de l'élément de soupape (20) insérée dans celui-ci.

16. Soupape de commutation de canal d'écoulement selon la revendication 15, dans laquelle l'extrémité inférieure de l'élément de soupape (20) est insérée dans le trou de guidage d'élément de soupape (60) pendant que l'élément de soupape (20) est déplacé entre une position la plus basse et une position la plus haute.

17. Soupape de commutation de canal d'écoulement selon la revendication 15 ou 16, dans laquelle l'extrémité inférieure de l'élément de soupape (20) est formée d'une face incurvée.

18. Soupape de commutation de canal d'écoulement selon l'une quelconque des revendications 15 à 17, dans laquelle le corps de soupape (10) inclut un élément de tronc (10B) et un élément de capuchon inférieur (10C), l'élément de tronc (10B) incluant la chambre de soupape (11) et ayant une ouverture inférieure (10b), l'élément de capuchon inférieur (10C) étant adapté pour fermer hermétiquement l'ouverture inférieure (10b) de l'élément de tronc (10B).

19. Soupape de commutation de canal d'écoulement selon la revendication 18, dans laquelle le trou de guidage d'élément de soupape (60) est ménagé dans l'élément de capuchon inférieur (10C).

20. Soupape de commutation de canal d'écoulement selon la revendication 19, dans laquelle le trou de guidage d'élément de soupape (60) est ménagé dans une saillie de montage (10c) de l'élément de capuchon inférieur (10C), la saillie de montage (10c) étant adaptée pour être montée dans l'ouverture inférieure (10b).

21. Soupape de commutation de canal d'écoulement selon la revendication 18, dans laquelle le trou de guidage d'élément de soupape (60) est formé de l'ouverture inférieure (10b) de l'élément de tronc (10B) et de l'élément de capuchon inférieur (10C).
